# DEMANDE DE BREVET EUROPEEN

(11) **EP 1 701 264 A2**
(43) Date de publication de la demande: **13.09.2006**
(21) Numéro de dépôt: 06101415.5
(22) Date de dépôt: 08.02.2006
(51) Int. Cl.: G06F 11/28

(54) **Procédé de reconnaissance d'une chronique, dispositif et programme d'ordinateur correspondants**

(30) Priorité: 10.03.2005 FR 0502394
(71) Demandeur: FRANCE TELECOM, 75015 Paris (FR)
(72) Inventeur: Le Maigat, Pierre, 22560, TREBEURDEN (FR); Dousson, Christophe, 22300, LANNION (FR)
(74) Mandataire: Bioret, Ludovic

(57) **Abrégé**

L'invention concerne un procédé de reconnaissance d'une chronique parmi un ensemble de chroniques possibles, chacune des chroniques étant composée d'un ensemble d'événements élémentaires et complexes liés entre eux par des conditions préalablement déterminées.

Selon l'invention, le procédé comprend les étapes suivantes :
- obtention d'une série d'événements élémentaires ;
- détermination d'au moins une chronique respectant au moins certaines des conditions liant les événements élémentaires, parmi l'ensemble de chroniques possibles, dite chronique présumée ;
et, pour chacune des chroniques présumées :
- identification d'au moins un événement complexe devant être présent dans la chronique présumée ;
- vérification de la présence de l'événement complexe, à partir des événements élémentaires correspondants ;
- confirmation de la reconnaissance de la chronique, si le ou les événements complexes sont présents ;
de façon que seuls les événements complexes nécessaires à la reconnaissance soient calculés.

## Description

### 1. Domaine de l'invention

Le domaine de l'invention est celui de la supervision temps réel, c'est-à-dire de la surveillance des évolutions d'un système en temps réel.

Plus précisément, l'invention concerne une technique permettant de reconnaître et d'interpréter des scénarios en ligne à partir de l'observation de flux d'événements.

L'invention permet notamment de détecter et/ou d'interpréter des scénarios de pannes à partir du suivi d'un ou de plusieurs paramètres (par exemple une absence de signal, un dépassement de seuil), des scénarios d'attaques sur un réseau à partir de l'observation d'alarmes (générées par exemple par les équipements d'un réseau de télécommunication) et/ou de la détection d'évènements d'entrée anormaux, ou encore d'interprétation de scènes à partir d'événements issus d'une ou plusieurs séquences vidéo.

De tels scénarios peuvent notamment être représentés (ou formalisés) par des chroniques tenant compte de liens de causalité temporelle entre plusieurs observations. Une chronique est ainsi composée d'un ensemble d'événements liés entre eux par des conditions préalablement déterminées, comme des contraintes temporelles, un certain nombre d'occurrence d'un événement, etc.

### 2. Art antérieur

### 2.1 Les chroniques

Dans le cadre de la surveillance d'un réseau de télécommunications par exemple, les événements rencontrés (encore appelés observations) peuvent être de type perte de signal, perte de trame, perte de liaison, etc.

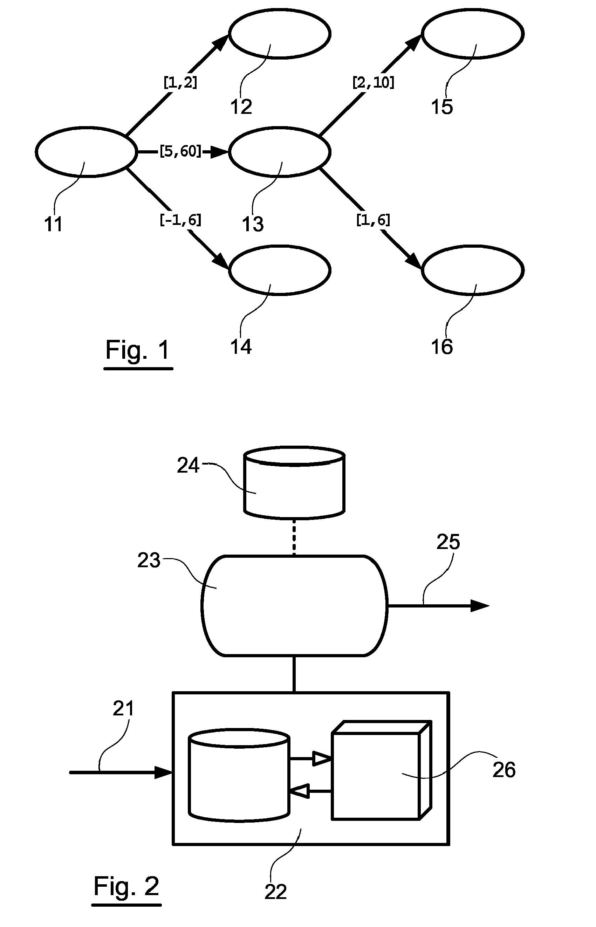

La figure 1 illustre un exemple de chronique, précisant les différents événements pouvant survenir et les intervalles de temps admissibles entre deux événements (entre crochets).

Ainsi, selon cet exemple de chronique, il doit s'écouler au plus tôt 1 seconde et au plus tard 2 secondes entre un événement de type perte de trame *LOF*_{*active*} 11 (de l'anglais « Loss of Frame Active ») et un événement de type perte de liaison *LD* 12 (de l'anglais « Link Down »).

Autrement dit, l'observation *LOF*_{*active*} 11 doit intervenir entre 1 et 2 secondes avant l'observation LD 12.

Cette chronique spécifie également :
- que l'événement de type perte de signal *LOS*_{*active*} 14 (de l'anglais « Loss of Signal Active ») doit intervenir au plus tôt 1 seconde avant et au plus tard 6 secondes après l'événement *LOF*_{*active*} 11 ;
- que l'événement de type trame retrouvée *LOF*_{*clear*} 13 (de l'anglais « Loss of Frame Clear ») doit intervenir au plus tôt 5 secondes et au plus tard 60 secondes après l'événement *LOF*_{*active*} 11 ;
- que l'événement de type liaison rétablie *LU* 15 (de l'anglais « Link Up ») doit intervenir au plus tôt 2 secondes et au plus tard 10 secondes après l'événement *LOF*_{*clear*} 13 ;
- que l'événement de type signal retrouvé *LOS*_{*clear*} 16 (de l'anglais « Loss of Signal Clear ») doit intervenir au plus tôt 1 seconde et au plus tard 6 secondes après l'événement *LOF*_{*clear*} *13.*

Ainsi, une instance de chronique reconnue pourrait être :
*(LOF*_{*active*} *0) (LD, 2) (LOF*_{*clear*}*. 5) (LOS*_{*active*}*, 6) (LU, 7) (LOS*_{*clear*}*. 11)*
ou encore :
*(LOF*_{*active*} *12) (LOS*_{*active*} *13) (LD, 15) (LOF*_{*clear*}*, 18) (LOS*_{*clear*}*, 19) (LU, 28)*
où le couple *(x, t)* indique que l'occurrence de l'événement x a lieu à la date t.

### 2.2 Reconnaissance des chroniques

La reconnaissance de chroniques est une technologie performante dans le cadre de la supervision de systèmes dynamiques et/ou complexes, comme par exemple les réseaux de télécommunications, dans lesquels un volume très important d'évènements peut être supervisé.

Le principe général d'un système de reconnaissance de chroniques repose sur une reconnaissance en ligne de ces schémas temporels dans un flux d'observations capté par un système de reconnaissance, comme présenté par Dousson et al. dans les documents « Situation Recognition : Representation and Algorithms» (Procceding of 13th IJCAI, Août 1993), « Suivi d'évolutions et reconnaissance de chroniques» (Thèse de l'Université Paul Sabatier, Septembre 1994), et « Extending and Unifying Chronicle Representation with Event Counters » (Proceedings of 15th ECAI, Juillet 2002).

On présente en relation avec la figure 2 le principe général d'un système de reconnaissance de chronique selon l'art antérieur.

Classiquement, un flux d'observations 21 (composé d'événements élémentaires, comme par exemple des alarmes) est traité dans un collecteur 22, qui capte et/ou récupère les observations du système surveillé. Ce collecteur 22 capte et/ou récupère les événements élémentaires au fur et à mesure de leur arrivée et les transmet à un moteur de reconnaissance 23, qui les compare à une base de modèles de chronique 24, et intègre les événements reconnus dans une ou plusieurs chroniques.

Un tel collecteur 22 comprend également des moyens de prétraitement 26 des observations. Ces moyens de prétraitement 26 permettent notamment de calculer des événements complexes, c'est-à-dire des événements nécessitant un traitement complexe, à partir d'une combinaison d'événements élémentaires. Autrement dit, un évènement complexe peut être considéré comme un scénario d'évènements élémentaires.

En effet, certaines observations doivent subir un prétraitement avant de pouvoir éventuellement être intégrées à une chronique.

Ainsi, dans l'exemple où les observations reposent sur un échantillonnage d'un signal continu, certaines observations remontées peuvent être de simple dépassement de seuil de valeurs (événement élémentaire) alors que d'autres sont calculées à partir de l'échantillon, comme par exemple la moyenne mobile, la transformée de Fourier, l'estimation de la dérivée, la reconnaissance de forme, etc (événement complexe), et nécessitent donc un traitement plus complexe.

Ce type de reconnaissance nécessite donc l'adjonction de moyens de prétraitement 26 des observations, par exemple une unité de traitement du signal. Cette unité peut éventuellement être externe au collecteur 22.

Le moteur de reconnaissance 23 délivre alors une chronique 25 (ou une instance de chronique) reconnue en fonction des événements élémentaires et des événements complexes calculés et préalablement reconnus, les événements étant intégrés dans les chroniques possibles au fur et à mesure de l'occurrence des événements observés (de type élémentaire ou complexe).

On soulignera ici que la reconnaissance de chronique s'effectue suivant l'ordre d'arrivée des observations/évènements, et non pas suivant la date d'occurrence de ces celles-ci.

### 2.3 Inconvénients des techniques de l'art antérieur

Bien qu'une telle technique de reconnaissance offre une synthèse efficace des alarmes et une détection rapide des dysfonctionnements, elle est très peu adaptée à la reconnaissance d'observations nécessitant un prétraitement, c'est-à-dire d'observations de type complexe.

En effet, selon les techniques de l'art antérieur, un calcul de tous les événements complexes (c'est-à-dire de tous les types d'observations possibles) est mis en oeuvre dès que le collecteur reçoit les différentes observations, afin de fournir au moteur de reconnaissance tous les événements (élémentaires et complexes) possibles.

On calcule donc inutilement un grand nombre d'événements complexes, même s'ils ne doivent pas être pris en compte dans la reconnaissance d'une instance de chronique parmi un ensemble de modèles de chronique connus.

Cette surcharge inutile de calcul peut être la cause de ralentissements importants dans le processus de reconnaissance, et peut affecter sévèrement l'efficacité du diagnostic en ligne, par exemple en retournant un résultat de reconnaissance dans un temps beaucoup trop important par rapport aux contraintes de réactivité nécessaires (déclenchement d'un système de sécurité, etc, par exemple).

### 3. Objectifs de l'invention

L'invention a notamment pour objectif de pallier ces inconvénients de l'art antérieur.

Plus précisément, un objectif de l'invention est de fournir une technique de reconnaissance de chronique qui permette d'améliorer l'efficacité de la supervision en temps réel d'un système.

Notamment, l'invention a pour objectif de fournir une telle technique qui ne mette en oeuvre un calcul des événements complexes que lorsque ce calcul est nécessaire.

L'invention a également pour objectif de proposer une telle technique permettant de limiter sur une fenêtre temporelle déterminée le calcul des événements complexes.

Un autre objectif de l'invention est de proposer une telle technique qui soit simple à mettre en oeuvre, peu complexe à implémenter sur le plan algorithmique, et peu coûteuse en termes de puissance de calcul.

### 4. Exposé de l'invention

Ces objectifs, ainsi que d'autres qui apparaîtront par la suite, sont atteints à l'aide d'un procédé de reconnaissance d'une chronique parmi un ensemble de chroniques possibles, chacune des chroniques étant composée d'un ensemble d'événements liés entre eux par des conditions préalablement déterminées, les événements comprenant des événements élémentaires et des événements complexes correspondant chacun à une combinaison spécifique d'au moins deux événements élémentaires.

Selon l'invention, un tel procédé comprend des étapes d'obtention d'une série d'événements élémentaires, de détermination d'au moins une chronique présumée parmi l'ensemble de chroniques possibles respectant au moins certaines des conditions liant les événements élémentaires, et, pour chacune des chroniques présumées, des étapes d'identification d'au moins un événement complexe devant être présent dans la chronique présumée, de vérification de la présence de l'événement complexe à partir des événements élémentaires correspondants, et de confirmation de la reconnaissance de la chronique, si le ou les événements complexes sont présents, de façon que seuls les événements complexes nécessaires à ladite reconnaissance soient calculés.

Ainsi, l'invention repose sur une approche tout à fait nouvelle et inventive de la reconnaissance d'une chronique en temps réel, permettant de simplifier les traitements pour la reconnaissance de chronique.

En effet, cette technique permet de s'affranchir des problèmes de surcharge de calculs affectant les systèmes de reconnaissance de chronique de l'art antérieur, en proposant de calculer uniquement les événements complexes nécessaires à la reconnaissance, tandis que la technique classique est de calculer tous les événements complexes, pour fournir au moteur de reconnaissance tous les événements (élémentaires et complexes), que ces événements appartiennent à une chronique possible ou non.

Selon l'art antérieur, on calcule donc inutilement des événements complexes qui ne sont pas nécessaires pour la reconnaissance.

Préférentiellement, les conditions préalablement déterminées sont des contraintes temporelles et/ou un nombre d'occurrences d'au moins un événement prédéfini liant les événements élémentaires et complexes d'une chronique entre eux.

Par exemple, une chronique peut préciser qu'un événement A doit arriver au plus tôt 1 seconde avant et au plus tard 3 secondes après un événement B. De même, une chronique peut préciser qu'entre les événements A et B, il doit y avoir 2 occurrences d'un événement C.

De manière avantageuse, l'étape de vérification est mise en oeuvre, pour chaque événement complexe identifié, sur une fenêtre temporelle déterminée à partir des événements élémentaires correspondants et d'au moins certaines des conditions de la chronique présumée.

Ainsi, lorsque le calcul d'un événement complexe est indispensable, l'invention permet de définir une plage temporelle sur laquelle il faut vérifier la présence de cet événement.

Notamment, cette fenêtre temporelle débute à la date d'occurrence au plus tôt et se termine à la date d'occurrence au plus tard de l'événement complexe identifié.

En effet, cette fenêtre temporelle est déterminée en tenant compte d'au moins un événement élémentaire et des conditions préalablement déterminées liant ce(s) événement(s) élémentaire(s) à l'événement complexe identifié.

Reprenons l'exemple précédent, considérant une chronique précisant qu'un événement B doit arriver au plus tôt 1 seconde avant et au plus tard 3 secondes après un événement A, et considérons que A est un événement élémentaire et B un événement complexe. Si l'événement A apparaît à la date t = 10, alors le moteur de reconnaissance sait que l'événement complexe B doit apparaître dans la fenêtre temporelle [9, 13], et va vérifier la présence de l'événement complexe identifié sur cette fenêtre.

Cette fenêtre temporelle peut également être définie par l'intersection d'au moins deux intervalles temporels calculés à partir de la date d'occurrence d'au moins un événement élémentaire et des conditions préalablement déterminées.

En effet, si la chronique précise que l'événement B doit arriver au plus tôt 1 seconde avant et au plus tard 3 secondes après l'événement A, et entre 2 et 6 secondes après l'événement C, alors si l'événement A apparaît à la date t = 10, et l'événement C apparaît à la date t = 8, alors l'événement B doit apparaître dans la fenêtre temporelle défmie par l'intersection des intervalles [9, 13] et [10, 14], c'est-à-dire dans la fenêtre temporelle [10, 13].

Préférentiellement, les événements complexes calculés sont mémorisés sous la forme d'au moins un nouvel événement élémentaire.

Ainsi, il n'est pas nécessaire de calculer de nouveau les événements complexes une fois qu'ils sont calculés. Un événement complexe calculé devient alors un événement élémentaire, et peut être utilisé comme événement élémentaire dans une autre chronique.

De façon avantageuse, les événements élémentaires sont mémorisés pendant une durée de stockage déterminée à partir des contraintes temporelles de la chronique présumée.

Cette durée de stockage, définie à partir des contraintes temporelles de la chronique, assure ainsi l'utilisation d'une mémoire de taille finie, et donc la faisabilité technique de l'invention.

Préférentiellement, on associe à chacun des événements complexes de l'ensemble de chroniques possibles une valeur de complexité de calculs, et on effectue, dans chacune des chroniques, une hiérarchisation des événements en fonction de cette valeur, l'étape d'identification servant à identifier les événements complexes de valeur inférieure à un seuil prédéterminé.

Ainsi, selon l'invention, les événements de moindre complexité, c'est-à-dire les événements complexes de valeur inférieure à un certain seuil sont traités en priorité. Une fois ces événements reconnus, le procédé selon l'invention détermine les événements de complexité supérieure, et traite ces événements.

L'invention assure ainsi un calcul hiérarchique des événements complexes en fonction de leur niveau de complexité, c'est-à-dire en fonction du temps nécessaire pour reconnaître ces événements, de sorte qu'on ne calcule les événements les plus complexes que si ce calcul est indispensable.

L'invention concerne également un dispositif de reconnaissance d'au moins une chronique parmi un ensemble de chronique correspondant, ainsi qu'un programme d'ordinateur comprenant des instructions de code de programme pour l'exécution des étapes du procédé de reconnaissance d'au moins une chronique décrit précédemment lorsque ledit programme est exécuté par un microprocesseur.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1, déjà présentée en relation avec l'art antérieur, illustre un modèle de chronique, avec les contraintes temporelles (entre crochets) que doivent respecter les événements ;
- la figure 2, également présentée en relation avec l'art antérieur, illustre le principe général de la reconnaissance de chroniques selon l'art antérieur ;
- la figure 3 présente le principe général de la reconnaissance de chroniques selon l'invention ;
- la figure 4 illustre un deuxième exemple de mise en oeuvre de l'invention, dans lequel le système de reconnaissance de la figure 3 interprète des scènes de vidéo surveillance ;
- la figure 5 présente un troisième exemple de mise en oeuvre de l'invention, dans lequel le système de reconnaissance de la figure 3 reconnaît un scénario en interprétant des courbes représentant l'évolution de certains paramètres.

### 6. Description d'un mode de réalisation de l'invention

### 6.1 Principe général de l'invention

Le principe général de l'invention repose sur une hiérarchisation des événements en fonction de leur niveau de difficulté de calcul, c'est-à-dire en fonction du temps nécessaire pour reconnaître ces événements, en considérant que les événements élémentaires nécessitent peu de temps de calcul tandis que les événements complexes, correspondant à une combinaison spécifique d'événements élémentaires, nécessitent plus de temps de calcul.

Selon l'invention, le moteur de reconnaissance intègre d'abord les événements élémentaires dans au moins une chronique présumée, puis, en fonction des événements élémentaires intégrés et des contraintes temporelles liant les événements d'une même chronique présumée, détermine la fenêtre temporelle sur laquelle un événement complexe de la chronique présumée doit se trouver.

Le collecteur calcule alors l'événement complexe identifié, ainsi que sa date d'occurrence, et vérifie que cet événement est effectivement présent dans la fenêtre temporelle déterminée.

Le collecteur calcule alors, dans la fenêtre temporelle déterminée, l'événement complexe indentifié ainsi que sa (ou ses) date(s) d'occurrence(s) dans ladite fenêtre temporelle.

L'invention propose ainsi un découplage des événements élémentaires (de type simple) et des événements complexes (de type composé) permettant une hiérarchisation des événements en fonction de leur complexité de calcul.

Cette approche est donc une approche « atemporelle », qui permet aussi bien de prévenir le collecteur qu'il devra surveiller l'apparition d'un événement complexe dans une fenêtre temporelle située dans le futur, que lui faire faire une recherche sur une fenêtre temporelle du passé.

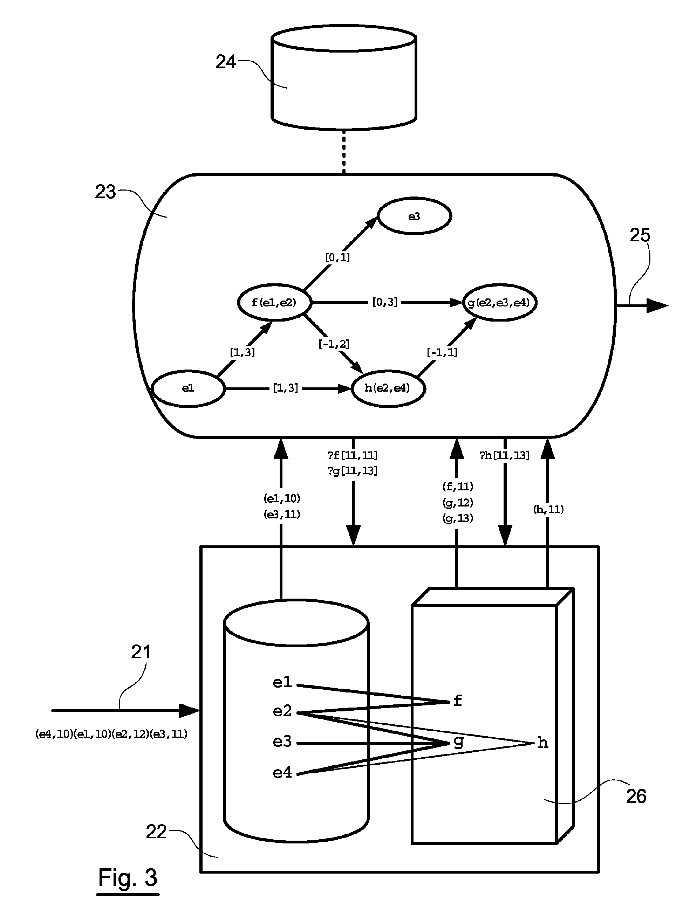

On présente désormais, en relation avec la figure 3, le principe général de la technique de reconnaissance selon l'invention.

Comme déjà décrit en relation avec la figure 2, un flux d'observations 21, composé d'événements élémentaires, est traité dans un collecteur 22, qui récupère les observations du système surveillé, et transmet ces observations au moteur de reconnaissance 23 par exemple le moteur CRS (de l'anglais « Chronicle Recognition System », ou « système de reconnaissance de chroniques » en français) proposé par Dousson et al. et présenté en relation avec l'art antérieur.

Selon l'invention, le moteur de reconnaissance 23 peut notamment hiérarchiser les différents événements en fonction du niveau de difficultés de calcul, pour chaque modèle de chronique.

Dans une variante de l'invention, il est également possible d'envisager que cette hiérarchisation des différents évènements ne soit pas activée par défaut, mais qu'elle puisse être activée de façon optionnelle par un utilisateur averti, ou bien de façon automatique, dès que le volume d'évènements contenu dans le flux à traiter en temps réel dépasse un certain seuil.

Dans l'exemple de la figure 3, où une chronique possible est composée des événements élémentaires e1, e2, e3 et e4 et des événements complexes f, g et h, les événements e1, e2, e3, e4 seront de niveau 1, les événements f et g seront de niveau 2 et l'événement h sera de niveau 3, où le niveau 3 correspond à la valeur de complexité la plus élevée.

De plus, pour chaque modèle de chronique, le moteur de reconnaissance 23 associe à chaque événement la liste des événements de niveau inférieur permettant de le calculer : l'événement f est déterminé à partir des événements e1 et e2, l'événement g est déterminé à partir des événements e2, e3 et e4, et l'événement h est déterminé à partir des événements e2 et e4.

Par ailleurs, pour chaque modèle de chronique, le moteur de reconnaissance 23 associe à chaque événement la liste des événements de niveau supérieur dont il permet le calcul : l'événement e1 entre dans la détermination de l'événement f, l'événement e2 entre dans la détermination des événements f, g et h, l'événement e3 entre dans la détermination de l'événement g, et l'événement e4 entre dans la détermination des événements g et h.

Selon un mode de réalisation préférentiel de l'invention, le collecteur 22 recevant le flux d'observations 21 comprend des moyens de prétraitement 26, encore appelés moyens de pré-calculs.

Il peut également stocker l'histoire du système surveillé, ou à tout le moins une partie de cette histoire, de sorte que le calcul d'un événement complexe par les moyens de prétraitement 26 soit conservé, et puisse être réutilisé par la suite.

Ainsi, dès qu'un événement complexe est calculé (ainsi que sa ou ses dates d'occurrences), celui-ci pourra être intégré dans une « base de données » et pourra servir dans le calcul d'autres événements complexes.

Considérons par exemple un flux d'observations 21 composé des événements élémentaires e1, e2, e3 et e4 reçus par le collecteur 22 dans l'ordre suivant : (e4, 10)(e1, 10)(e2, 12)(e3, 11), avec le couple (x, t) précisant que l'occurrence de l'événement x a lieu à la date t.

Selon l'invention, le collecteur 22 ne remonte, dans un premier temps, que les observations disponibles, attendant du moteur de reconnaissance 23 l'ordre de procéder au calcul des événements complexes pour les remonter.

Plus précisément, on considère qu'un événement est disponible pour le collecteur lorsqu'il s'agit d'un événement élémentaire provenant du système surveillé, ou lorsqu'il s'agit d'un événement complexe déjà calculé par le pré-calculateur 26 et conservé en mémoire.

Ainsi, lorsqu'un événement est disponible le collecteur 22 transmet l'événement au moteur de reconnaissance 23, qui (en une passe) essaie de l'intégrer dans toutes les chroniques possibles de la base de modèles de chronique 24. Le collecteur 22 vérifie alors si cet événement appartient à une ou plusieurs listes d'événements de niveau supérieur. Si la réponse est négative, l'événement n'est pas stocké. Si la réponse est positive, il est stocké pendant une certaine durée de stockage. Cette durée de stockage assure ainsi l'existence d'un collecteur 22 avec une mémoire finie.

On détermine par exemple la durée de stockage d'un événement disponible en évaluant, pour chaque modèle de chroniques ou instance de chronique dans lequel il intervient, la durée de vie de la chronique, c'est-à-dire la durée maximale entre le dernier événement intégré et la plus grande des dates au plus tard des événements restants à intégrer. On ajoute ensuite le décalage maximal autorisé pour tous les événements non encore arrivés possibles pour la chronique, c'est-à-dire ceux qui sont intégrables directement et ceux qui interviennent dans des événements de niveau supérieur (en considérant que le moteur de reconnaissance permet à un utilisateur de spécifier pour chaque événement un retard maximum autorisé entre sa date d'occurrence et sa date d'arrivée au moteur, afin de prendre en compte la possibilité que les différents événements arrivent dans un ordre différent de celui de leur date effective d'occurrence). La durée obtenue est la durée de vie de l'événement par rapport à cette chronique. Pour obtenir la durée de stockage, on prend la plus grande des durées de vie de l'événement par rapport à toutes les chroniques (modèles et instances).

Ainsi, en reprenant l'exemple de la figure 3, et en supposant que les événements e4, e1 et e2 arrivent instantanément au moteur 23, c'est-à-dire respectivement aux dates d4 = 10, d1 = 10 et d2 = 12, et que le retard maximum autorisé pour l'événement e3 soit de 5 secondes, alors la date d'occurrence maximale autorisée pour que l'événement e3 soit intégré dans la chronique sera d = 11 + 5 = 16 secondes.

Lorsque l'événement e4 arrive, il initie potentiellement une instance de la chronique à d = 10. La durée de vie de la chronique est alors de 4 secondes. On rajoute alors les 5 secondes de retard possible de l'événement e3. La durée du stockage est donc de 4 + 5 = 9 secondes. Ainsi, si les dates des événements sont telles que le moteur de reconnaissance 23 ne demande pas le calcul des événements g ou h, l'événement e4 sera effacé du collecteur 22 à la date d = 19. Le délai de 9 secondes suffit donc à la reconnaissance complète de la chronique.

De même lorsque l'événement e2 est disponible, seul l'événement el a été intégré, la durée de vie de la chronique est donc toujours de 4 secondes. On rajoute alors le retard possible de l'événement e3. On obtient une durée de stockage pour l'événement e2 de 4 + 5 = 9 secondes. On effacera donc l'événement e2 à d = 12 + 9 = 21 secondes, ce qui est suffisant pour la reconnaissance de la chronique.

Ainsi, le collecteur 22 peut également faire remonter au moteur de reconnaissance 23, en plus des événements élémentaires, les événements complexes mémorisés dans le collecteur 22, c'est-à-dire les événements complexes qui ont déjà été calculés pour d'autres chroniques par exemple, et conserver ces événements pour une certaine durée de stockage.

Dans cet exemple, la chronique présumée est composée des événements élémentaires e1, e2, e3, e4, et des événements complexes f, g et h, qui n'ont jamais été calculés auparavant.

Le collecteur 22 fait remonter au moteur de reconnaissance 23 les événements élémentaires e1 et e3 dès qu'ils sont disponibles. Ainsi le collecteur 22 informe le moteur 23 qu'une occurrence de l'événement e1 (respectivement e3) a eu lieu à la date t = 10 (respectivement t = 11).

Le moteur de reconnaissance 23 détermine ainsi au moins une chronique présumée, parmi les chroniques possibles de la base de modèles de chroniques 24, comprenant les événements élémentaires e1 et e3 et respectant au moins certaines conditions liant ces événements. Le moteur 23 vérifie ainsi que les événements e1, apparu à la date t = 10, et e3, apparu à la date t = 11, sont bien temporellement corrélés pour la chronique présumée.

Une fois les événements élémentaires intégrés et au moins une chronique présumée déterminée, le moteur de reconnaissance 23 calcule les fenêtres temporelles pertinentes pour les événements complexes qui n'ont pas déjà été intégrés, et donne l'ordre au collecteur 22 d'effectuer la recherche/calcul de ces événements complexes sur ces fenêtres temporelles. Ces fenêtres sont déterminées en fonction des contraintes temporelles liant les événements de la chronique présumée, et éventuellement du nombre d'occurrences d'un événement sur une période donnée.

Ainsi, sachant que l'événement complexe f doit intervenir entre 1 et 3 secondes après l'événement élémentaire el, et entre 0 et 1 seconde avant l'événement e3 (conditions préalablement déterminées dans la chronique présumée), et que la date d'occurrence des événements el et e3 est respectivement t = 10 et t = 11, le moteur de reconnaissance 23 détermine que la fenêtre temporelle pertinente pour la recherche de l'événement f est l'intervalle [11, 11].

De même, l'événement complexe g, déterminé à partir des événements élémentaires e2, e3 et e4, apparaît au plus tôt 0 seconde et au plus tard 3 secondes après l'événement f. Sachant que la date d'occurrence de l'événement e3 est t = 11 et que l'événement f apparaît au plus tôt 1 seconde avant l'événement e3, le moteur de reconnaissance 23 détermine que l'intervalle pertinent pour la recherche de l'événement g est l'intervalle [11, 13].

Le moteur 23 demande alors au collecteur 22 de calculer/rechercher les événements complexes f et g sur ces intervalles.

On suppose par exemple que le collecteur 22 trouve une occurrence de l'événement f à t = 11, et trouve une occurrence de l'événement g à t = 12 et une autre à t = 13.

On est donc potentiellement en présence de l'instance de chronique C1 = (e1, 10)(e3, 11)(f, 11)(g, 12) ou de l'instance de chronique C2 = (e1, 10)(e3, 11)(f, 11)(g, 13) de la chronique présumée.

Le moteur de reconnaissance 23 détermine alors les intervalles pertinents pour l'événement complexe h, de niveau supérieur aux événements complexes f et g.

Si on considère que l'événement e1 arrive à la date t = 10, que l'événement f arrive à la date t = 11, et que l'événement g arrive à la date t = 12, alors l'intervalle pertinent pour la recherche de l'événement h est l'intervalle [11, 13].

Si on considère que l'événement e1 arrive à la date t = 10, que l'événement f arrive à la date t = 11, et que l'événement g arrive à la date t = 13, alors l'intervalle pertinent pour la recherche de l'événement h est l'intervalle [12, 13].

Le collecteur 22 recherche alors les occurrences de l'événement h sur l'intervalle [11, 13], correspondant à la réunion des intervalles [11, 13] et [12, 13]. Il trouve par exemple une occurrence de l'événement h à t = 11.

La chronique présumée est alors reconnue pour les dates (e1, 10)(e3, 11)(f, 11)(g, 12)(h, 11).

Ainsi, selon l'invention, les événements complexes ne sont calculés que si leur calcul est nécessaire, et ces événements sont calculés dans l'ordre de leur niveau de difficulté.

Dans cet exemple, les événements complexes f et g, d'une complexité de niveau 2, sont donc calculés avant l'événement h, d'une complexité de niveau 3, le niveau de complexité étant par exemple déterminé par un expert.

Ainsi, selon l'invention, dans le cas où l'événement complexe g arrive à une date incompatible avec la chronique en cours de reconnaissance (chronique présumée), le calcul de l'événement complexe h se sera pas effectué (bien que l'événement h précède temporellement l'événement g).

L'invention permet ainsi d'économiser de la puissance de calcul, notamment dans le cas où le calcul de l'événement h est très coûteux en termes de ressources.

Selon les techniques de l'art antérieur en revanche, les événements complexes f, g et h sont calculés dès que les observations permettant de les calculer sont disponibles. Ainsi l'événement h aurait été recherché/calculé dès que les événements élémentaires e2 et e4 seraient arrivés au collecteur.

En reprenant l'exemple précédent, si le collecteur avait reçu le flux (e4, 10)(e1, 10)(e2, 12)(e3, 11), il aurait transmis le couple (e1, 10) au moteur de reconnaissance, puis il aurait calculé les événements f(e1, e2) et, simultanément, h(e2, e4), et enfin il aurait transmis le couple (e3, 11) et calculer l'événement complexe g(e2, e3, e4).

Selon l'art antérieur, tous les événements complexes auraient donc été calculés sans se soucier du respect des conditions préalablement définies dans les chroniques.

### 6.2 Premier exemple de mise en oeuvre de l'invention

On présente désormais un premier exemple de mise en oeuvre de l'invention pour la détection de serveurs/routeurs « naïfs » impliqués dans une attaque par Déni de Service Distribuée Réfléchie (ou RDDoS).

Ce type d'attaque se déroule schématiquement comme suit : un attaquant (un utilisateur ou un serveur distant) usurpe l'adresse de sa cible (terminal ou serveur), et avec cette adresse, envoie des demandes de connexions (SYN) à des serveurs et des routeurs dits « naïfs », c'est-à-dire « innocents », dans le sens où ces serveurs et routeurs sont utilisés à leur insu lors de l'attaque.

Les serveurs et routeurs « naïfs » émettent en direction de la cible des paquets SYN/ACK pour établir la connexion. Le grand nombre de serveurs/routeurs en jeu provoque un bourrage (et donc un déni de services) pour le serveur cible.

L'attaque peut être définie par un très grand débit de paquets SYN/ACK émis des routeurs vers la cible, et, au niveau des éléments « naïfs », un débit supérieur à la moyenne de paquets SYN provenant de la cible (scénario d'attaque).

On peut remarquer que les débits de paquets SYN ne sont pas toujours suffisamment importants pour déclencher des alertes (car trop fréquents, trop coûteux à calculer ou pas représentatifs d'une vraie attaque SYN).

Dans cet exemple, on cherche à identifier les éléments « naïfs » du réseau intervenant dans une attaque RDDoS, en se plaçant dans le cas d'un réseau dont les routeurs possèdent une sonde remontant des informations sur un échantillonnage des flux passant dans ces routeurs.

Après filtrage de ces informations, on ne garde par exemple que les débits, les adresses sources et les adresses destinations d'un flux. Ainsi, un événement TWL[@SOURCE,@DEST] (de l'anglais «Traffic Warning Low ») représente un flux allant de l'adresse source « @SOURCE » à l'adresse destination « @DEST » avec un débit de paquets SYN supérieur à un premier seuil prédéterminé, et un événement TWH[@DEST] (de l'anglais «Traffic Warning High ») représente un flux allant vers l'adresse destination « @DEST» avec un débit de paquets SYN/ACK supérieur à un deuxième seuil prédéterminé.

Ainsi, on considère une chronique précisant que le serveur situé à l'adresse « @DEST » de l'événement TWL[@CIBLE,@DEST] est impliqué dans une attaque **RDDoS** vers une cible située à une adresse « @CIBLE » (dans TWH[@CIBLE]), les événements de la chronique étant liés entre eux par les conditions préalablement déterminées suivantes :
- l'événement TWH[@CIBLE] doit apparaître 2 fois entre les événements TWH[@CIBLE]-1 et TWH[@CIBLE] F ;
- l'événement TWL[@CIBLE,@DEST], doit apparaître 3 fois entre les événements TWL[@CIBLE,@DEST]-1 et TWL[@CIBLE,@DEST]_F ;
- les événements TWL[@CIBLE,@DEST]-F et TWL[@CIBLE,@DEST] sont espacés d'au moins 0,5 seconde et d'au plus 1 seconde ;
- les événements TWH[@CIBLE] et TWL[@CIBLE,@DEST]-1 sont espacés d'au plus 10 secondes ;
- les événements TWH[@CIBLE]_F et TWH[@CIBLE]_I sont espacés d'au plus 1 seconde.

Considérons le flux d'observations suivant :

| | | |
|---|---|---|
| 1: TWL[xx,yy] | 7: TWL[xx,yy] | 13: TWL[aa.bb.cc.dd,pp.qq.rr.ss] |
| 2: TWL[xx,yy] | 8: TWL[aa.bb.cc.dd,tt] | 14: TWL[aa.bb.cc.dd,tt] |
| 3: TWH[zz] | 9: TWH[aa.bb.cc.dd] | 15: TWH[aa.bb.cc.dd] |
| 4:TWL[aa.bb.cc.dd,pp.qq.rr.ss] | 10: TWL[aa.bb.cc.dd,ll.nn.mm.oo] | 16: TWH[aa.bb.cc.dd] |
| 5: TWL[aa.bb.cc.dd,ll.nn.mm.oo] | 11: TWL[aa.bb.cc.dd,pp.qq.rr.ss] | 17: TWH[aa.bb.cc.dd] |
| 6: TWL[aa.bb.cc.dd,ll.nn.mm.oo] | 12: TWH[aa.bb.cc.dd] | 18: TWH[aa.bb.cc.dd] |

avec aa.bb.cc.dd, xx et zz les adresses de la cible, 11.nn.mm.oo, pp.qq.rr.ss, yy, et tt les adresses des serveurs et routeurs.

Selon l'invention, le moteur de reconnaissance vérifie notamment que la condition d'occurrence de l'événement TWH[@CIBLE] entre les événements TWH[@CIBLE]_I et TVM[@CIBLE]_F est vérifiée avant de calculer les autres événements complexes.

Ainsi, le moteur attend les événements référencés 9 et 12 avant de calculer des événements plus complexes.

Cette première condition vérifiée, le moteur de reconnaissance demande au collecteur les événements de type TWL[@CIBLE,@DEST] s'étant produits au plus tôt 10 + 1 = 11 secondes avant l'événement TWH[@CIBLE].

Le collecteur transmet au moteur de reconnaissance les événements référencés 4, 5, 6, 8, 10, 11, 13 et 14. Le moteur intègre à la chronique les événements référencés 4, 11, 13 et 5, 6, 10, reconnaissant ainsi la chronique et identifiant les serveurs pp.qq.rr.ss et ll.nn.mm.oo comme participant à l'attaque.

De son côté, le collecteur ne conserve les événements de type TWL que 10 + 1 = 11 secondes (taille maximale de la chronique).

Selon l'art antérieur en revanche, un nombre important de chroniques présumées auraient été créés, puisque les événements référencés 1, 2 et 7 par exemple forment le début d'une chronique pour une attaque sur l'adresse de la cible « @xx ». De plus, comme les événements de type TWL précédent ceux de type TWH pour une même cible, et que les événements de type TWL sont très fréquents, la technique selon l'art antérieur aurait mis en oeuvre un nombre important de calculs non nécessaires.

### 6.3 Deuxième exemple de mise en oeuvre de l'invention

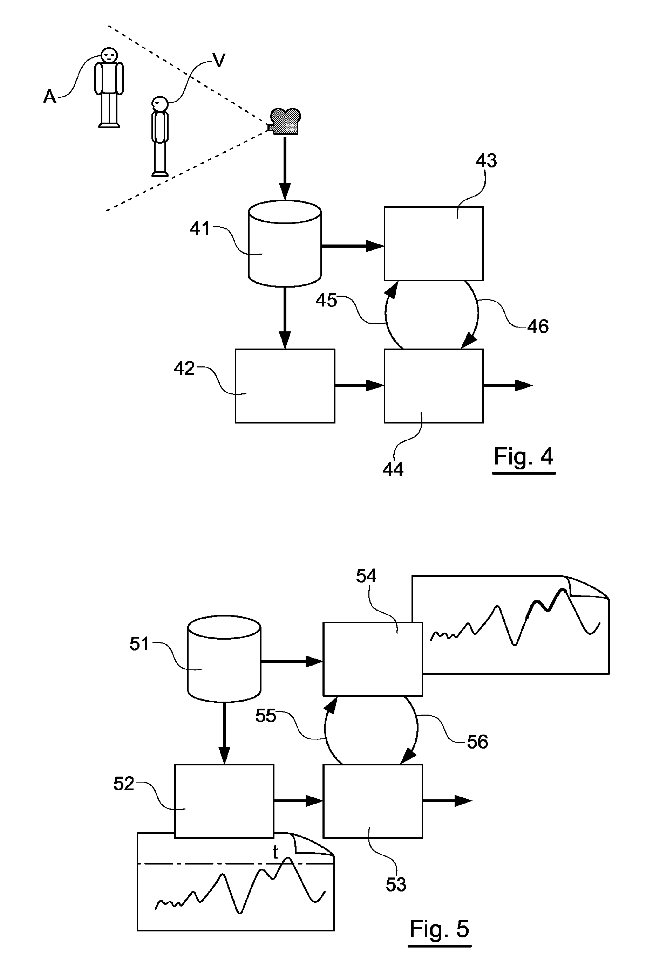

On présente désormais, en relation avec la figure 4, un deuxième exemple de mise en oeuvre de l'invention pour l'interprétation automatique de scènes de vidéo surveillance.

Dans cet exemple, il s'agit de reconnaître certaines séquences d'événements à partir d'une vidéo de surveillance 41 (parking, guichet, station de métro, etc), et de les confronter à une base de données des scénarios à reconnaître. Ces événements peuvent notamment provenir de sources différentes (plusieurs caméras, détecteur de présence, etc).

Par exemple, on définit une chronique d'agression d'une personne de la façon suivante :
1. entrée d'une personne dans le champ d'une caméra ;
2. entrée d'une autre personne dans le champ d'une caméra ;
3. les deux personnes se rapprochent l'une de l'autre ;
4. une des deux personnes (A) porte un coup à son vis-à-vis (V) ;
5. la victime V se retrouve à terre ;
6. l'agresseur A s'éloigne.

L'ensemble des événements 1, 2, 3 et 6 décrits dans ce scénario sont des primitives vidéo aisées à extraire à l'aide d'algorithmes de détection de mouvement. Ce sont donc des événements élémentaires, facilement détectables.

En revanche, le fait de porter un coup à une autre personne (événement 5) et de chuter à terre (événement 6) demande une analyse plus fine (et plus coûteuse en temps de calcul) à l'aide d'algorithmes spécifiques. Il s'agit donc d'événements complexes.

On peut notamment se placer dans l'hypothèse où il existe plusieurs algorithmes spécifiques permettant de calculer autant de mouvements spécifiques (par exemple, le fait de porter un coup) : il n'est pas souhaitable d'exécuter en permanence l'ensemble de ces algorithmes afin de détecter tous les événements possibles.

Ainsi, selon l'invention, le module de détection de mouvement 42 envoie à un module de reconnaissance 44 les événements d'entrée et sortie d'une zone défmie (événements 1 puis 2 puis 3 et enfin, 6).

Le module de reconnaissance 44, encore appelé module d'interprétation de scénarios, doit vérifier si la personne restante a chuté entre les événements 3 et 6, en considérant que ce mouvement est plus simple à calculer que le fait de porter un coup (donc de niveau de complexité inférieur). Il demande donc (45) à un module de détection spécifique 43 d'analyser la séquence vidéo 41 entre les instants t1 et t2 correspondants aux occurrences de l'événement 3 et de l'événement 6. En effet, en se basant sur les événements déjà reçus, l'algorithme spécifique du mouvement particulier manquant sera déclenché sur une fenêtre temporelle déterminée.

Si la détection spécifique 43 rapporte (46) un événement de chute 5, celui-ci correspondra à l'étape 5 du scénario. Le module d'interprétation de scénarios 44 demande (45) alors au module de détection 43 de vérifier la présence d'un mouvement de « coup porté » entre les instants t1 et t2 correspondants aux occurrences des événements 3 et 5.

En cas de réponse positive, le scénario d'agression est reconnu.

Ainsi, l'invention permet notamment de s'affranchir du calcul en permanence des mouvements spécifiques, c'est-à-dire des événements complexes. En effet, selon l'invention, ce calcul ne sera déclenché que lorsque tous les événements élémentaires (éléments basiques) d'un scénario auront été reconnus.

### 6.4 Troisième exemple de mise en oeuvre de l'invention

On présente finalement, en relation avec la figure 5, un troisième exemple de mise en oeuvre de l'invention à partir de l'observation de certains des paramètres d'un système. Ces paramètres évoluant dans le temps, on considère dans cet exemple le cas où ils sont mesurés de façon continue et sont donc traduits sous forme de courbes.

Dans ce cas, c'est l'analyse de ces courbes qui produit les événements observés qui sont ensuite intégrés dans des chroniques. Certains de ces événements sont simples à calculer (par exemple, le dépassement de seuils) et sont considérés comme des événements élémentaires. D'autres nécessitent un traitement plus complexe (comme le calcul d'une moyenne mobile sur une fenêtre) et sont donc considérés comme des événements complexes. D'autres enfin sont très coûteux en termes de calculs, comme par exemple la recherche d'un motif particulier sur une courbe (oscillations, calcul de la fréquence, etc), et sont considérés comme des événements complexes de niveau supérieur.

La technique de reconnaissance de chronique selon l'invention propose une reconnaissance des événements élémentaires (événements simples à calculer) avant de demander explicitement la recherche sur une fenêtre temporelle donnée d'un événement plus coûteux à déterminer.

Ainsi, partant d'un ensemble de paramètres mesurés 51, la première étape consiste à déterminer au moins une chronique respectant les conditions liant les événements élémentaires, comme la détection de dépassements de seuils 52.

Les événements élémentaires de type dépassement de seuils sont alors transmis au module de reconnaissance 53.

Ce module 53 peut notamment demander (55) à un module de détection de motifs particuliers 54 de lancer une recherche de motif (événement complexe de la chronique présumée) sur les mesures de paramètres entre les instants t1 et t2 (plage de temps déterminée).

Le module de détection de motifs 54 lit à son tour les données issues des mesures de paramètres sur la fenêtre temporelle déterminée, puis envoie 56 les résultats de son analyse au module de reconnaissance 53.

Le module 53 vérifie ainsi si une instance de chronique est reconnue.

L'invention permet ainsi une optimisation du temps de calcul pour la reconnaissance en ligne de chroniques, en ne calculant que les événements complexes nécessaires à la reconnaissance d'une chronique, tandis que selon l'art antérieur, tous les événements complexes possibles à partir des événements élémentaires étaient déterminés.

De plus, lorsque les calculs complexes sont indispensables, la technique proposée permet de déterminer la fenêtre temporelle durant laquelle l'événement complexe doit intervenir.

## Revendications

1. Procédé de reconnaissance d'une chronique parmi un ensemble de chroniques possibles, chacune desdites chroniques étant composée d'un ensemble d'événements liés entre eux par des conditions préalablement déterminées,
lesdits événements comprenant des événements élémentaires (e1, e2, e3, e4) et des événements complexes (f, g, h) correspondant chacun à une combinaison spécifique d'au moins deux événements élémentaires,
**caractérisé en ce qu'**il comprend les étapes suivantes :
- obtention d'une série d'événements élémentaires ;
- détermination d'au moins une chronique respectant au moins certaines desdites conditions liant lesdits événements élémentaires, parmi ledit
ensemble de chroniques possibles (24), dite chronique présumée ; et, pour chacune desdites chroniques présumées :
- identification d'au moins un événement complexe devant être présent dans ladite chronique présumée ;
- vérification de la présence dudit événement complexe, à partir des événements élémentaires correspondants ;
- confirmation de la reconnaissance de ladite chronique, si le ou lesdits événements complexes sont présents ;
de façon que seuls les événements complexes nécessaires à ladite reconnaissance soient calculés.

2. Procédé de reconnaissance selon la revendication 1, **caractérisé en ce que**, pour chaque événement complexe identifié, ladite étape de vérification est mise en oeuvre sur une fenêtre temporelle déterminée à partir desdits événements élémentaires correspondants et d'au moins certaines desdites conditions de la chronique présumée.

3. Procédé de reconnaissance selon la revendication 2, **caractérisé en ce que** ladite fenêtre temporelle débute à la date d'occurrence au plus tôt et se termine à la date d'occurrence au plus tard dudit événement complexe identifié.

4. Procédé de reconnaissance selon l'une quelconque des revendications 2 et 3,
**caractérisé en ce que** ladite fenêtre temporelle est définie pas l'intersection d'au moins deux intervalles temporels calculés à partir de la date d'occurrence d'au moins un événement élémentaire et des conditions préalablement déterminées.

5. Procédé de reconnaissance selon l'une quelconque des revendications 1 à 4,
**caractérisé en ce que** lesdits événements complexes calculés sont mémorisés sous la forme d'au moins un nouvel événement élémentaire.

6. Procédé de reconnaissance selon l'une quelconque des revendications 1 à 5,
**caractérisé en ce que** lesdites conditions préalablement déterminées sont des contraintes temporelles et/ou un nombre d'occurrences d'au moins un événement prédéfini.

7. Procédé de reconnaissance selon la revendication 6, **caractérisé en ce que** chacun desdits événements élémentaires est mémorisé pendant une durée de stockage déterminée à partir des contraintes temporelles de ladite chronique présumée.

8. Procédé de reconnaissance selon l'une quelconque des revendications 1 à 7,
**caractérisé en ce qu'**à chacun des événements complexes de l'ensemble de chroniques possibles est associé à une valeur de complexité de calculs, et **en ce qu'**on effectue, dans chacune desdites chroniques, une hiérarchisation des événements en fonction de ladite valeur, ladite étape d'identification identifiant les événements complexes de valeur inférieure à un seuil prédéterminé.

9. Dispositif de reconnaissance d'une chronique parmi un ensemble de chroniques possibles, chacune desdites chroniques étant composée d'un ensemble d'événements liés entre eux par des conditions préalablement déterminées, lesdits événements comprenant des événements élémentaires (e1, e2, e3, e4) et des événements complexes (f, g, h) correspondant chacun à une combinaison spécifique d'au moins deux événements élémentaires,
**caractérisé en ce qu'**il comprend :
- des moyens (42) d'obtention d'une série d'événements élémentaires ;
- des moyens de détermination d'au moins une chronique respectant au moins certaines desdites conditions liant lesdits événements élémentaires, parmi ledit ensemble (24) de chroniques possibles, dite chronique
présumée ; et, pour chacune desdites chroniques présumées :
- des moyens d'identification d'au moins un événement complexe devant être présent dans ladite chronique présumée ;
- des moyens de vérification de la présence dudit événement complexe, à partir des événements élémentaires correspondants ;
- des moyens de confirmation de la reconnaissance de ladite chronique, si le ou lesdits événements complexes sont présents ;
de façon que seuls les événements complexes nécessaires à ladite reconnaissance soient calculés.

10. Programme d'ordinateur comprenant des instructions de code de programme pour l'exécution des étapes du procédé de reconnaissance d'une chronique parmi un ensemble de chroniques possibles, chacune desdites chroniques étant composée d'un ensemble d'événements liés entre eux par des conditions préalablement déterminées, lesdits événements comprenant des événements élémentaires et des événements complexes correspondant chacun à une combinaison spécifique d'au moins deux événements élémentaires, selon l'une quelconque des revendications 1 à 9 lorsque ledit programme est exécuté par un ordinateur.

11. Produit programme d'ordinateur comprenant des instructions de code de programme enregistré sur un support utilisable dans ou par un ordinateur, ledit programme permettant la reconnaissance d'une chronique parmi un ensemble de chronique possibles, chacune desdites chroniques étant composée d'un ensemble d'événements liés entre eux par des conditions préalablement déterminées, lesdits événements comprenant des événements élémentaires (e1, e2, e3, e4) et des événements complexes (f, g, h) correspondant chacun à une combinaison spécifique d'au moins deux événements élémentaires,
**caractérisé en ce que** ledit produit programme d'ordinateur comprend :
- des moyens de programmation lisibles par ordinateur pour effectuer une étape d'obtention d'une série d'événements élémentaires ;
- des moyens de programmation lisibles par ordinateur pour effectuer une étape de détermination d'au moins une chronique respectant au moins certaines desdites conditions liant lesdits événements élémentaires, parmi
ledit ensemble (24) de chroniques possibles, dite chronique présumée ; et, pour chacune desdites chroniques présumées :
- des moyens de programmation lisibles par ordinateur pour effectuer une étape d'identification d'au moins un événement complexe devant être présent dans ladite chronique présumée ;
- des moyens de programmation lisibles par ordinateur pour effectuer une étape de vérification de la présence dudit événement complexe, à partir des événements élémentaires correspondants ;
- des moyens de programmation lisibles par ordinateur pour effectuer une étape de confirmation de la reconnaissance de ladite chronique, si le ou
lesdits événements complexes sont présents ;
de façon que seuls les événements complexes nécessaires à ladite reconnaissance soient calculés.
